# EUROPÄISCHE PATENTANMELDUNG

(11) **EP 4 488 148 A1**
(43) Veröffentlichungstag der Anmeldung: **08.01.2025**
(21) Anmeldenummer: 24177018.9
(22) Anmeldetag: 21.05.2024
(51) Int. Cl.: B62D 25/10, B62D 25/12

(54) **LANDWIRTSCHAFTLICHE ARBEITSMASCHINE**

(30) Priorität: 03.07.2023 DE 102023117511
(71) Anmelder: CLAAS Selbstfahrende Erntemaschinen GmbH, 33428 Harsewinkel (DE)
(72) Erfinder: von Teschenhausen Uckelmann, Ulrich, 48231 Warendorf (DE)
(74) Vertreter: CLAAS Gruppe

(57) **Zusammenfassung**

Die vorliegende Erfindung betrifft eine landwirtschaftliche Arbeitsmaschine (1) mit einem Motorraum (11) und einer den Motorraum (11) zumindest bereichsweise begrenzenden Motorhaube (12). Die Motorhaube (12) umfasst eine Rahmenstruktur (15) mit einem ersten Rahmenelement (15a) und einem zweiten Rahmenelement (15b). Das erste Rahmenelement (15a) und das zweite Rahmenelement (15b) sind mittels eines Gelenks (16) derart miteinander gekoppelt, dass das zweite Rahmenelement (15b) relativ zum ersten Rahmenelement (15a) reversibel zwischen einer ersten Stellung (P1) und einer zweiten Stellung (P2) verschwenkbar ist. Die Arbeitsmaschine (1) ist dadurch gekennzeichnet, dass die Motorhaube (12) zumindest ein Paar von Aktoren (17) mit einem ersten und zweiten Aktor (17a, 17b) umfasst, die jeweils endseitig einerseits an das erste Rahmenelement (15a) und andererseits an das zweite Rahmenelement (15b) der Rahmenstruktur (15) angebunden sind. Die beiden Aktoren (17a, 17b) sind derart zueinander angeordnet, dass sie in unterschiedliche Richtungen wirken.

## Beschreibung

Die vorliegende Erfindung betrifft eine landwirtschaftliche Arbeitsmaschine gemäß dem Oberbegriff des unabhängigen Patentanspruchs 1.

Landwirtschaftliche Arbeitsmaschinen, beispielsweise Traktoren, werden üblicherweise durch ein Antriebsaggregat in Form einer Verbrennungskraftmaschine angetrieben, welche in einem im Wesentlichen geschlossenen Motorraum angeordnet ist. Der Antriebsmotor liefert dabei die Energie zum Vortrieb der Arbeitsmaschine und üblicherweise auch zum Antrieb von Nebenaggregaten. Moderne landwirtschaftliche Arbeitsmaschinen, die einer hohen Leistungsklasse zugeordnet sind, umfassen ein entsprechend groß dimensioniertes Antriebsaggregat, um die hohe Leistung zumindest zeitweise im Betrieb der landwirtschaftlichen Arbeitsmaschine während der Durchführung von Arbeitsaufträgen auf dem Hof und/oder Feld aufbringen zu können. Damit derartige leistungsstarke landwirtschaftliche Arbeitsmaschinen zuverlässig betrieben werden können, ist es erforderlich eine hinreichende Kühlung zu gewährleisten. Dies wiederum bedingt den Einsatz von leistungsstarken Kühlaggregaten und Lüfteraggregaten. Die Luft zum Kühlen wird dabei üblicherweise durch den Lüfter frontseitig an der landwirtschaftlichen Arbeitsmaschine angesaugt und durch einen Kühler in den Motorraum zum Antriebsaggregat geleitet. Auch diese müssen demnach entsprechend dimensioniert sein, um die erforderliche Kühlleistung im Betrieb der landwirtschaftlichen Arbeitsmaschine aufzubringen. Hieraus ergibt sich folglich ein erheblicher Bauraumbedarf für die Unterbringung des Antriebsaggregats und der Aggregate zur Kühlung des Antriebsaggregats im Betrieb der landwirtschaftlichen Arbeitsmaschine. Weiterhin sind Komponenten einer Abgasreinigungsvorrichtung im Motorraum zu führen.

Wie eingangs erwähnt, ist der Motorraum im Wesentlichen geschlossen. Um dies zu erreichen ist eine Motorhaube vorgesehen, die der Abdeckung der im Motorraum angeordneten Aggregate dient. Hierdurch können die im Motorraum angeordneten Aggregate vor Verunreinigungen und ein Bediener vor den im Betrieb sich stark erwärmenden Antriebs- und/oder Abgaskomponenten geschützt werden. Die Motorhaube ist dabei zwischen einer Schließstellung, in der sie den Motorraum und die dort angeordneten Aggregate umschließt, somit schützt, und einer Offenstellung, in der sie einen Zugang zu den im Motorraum angeordneten Aggregaten freigibt, beispielsweise für Wartungszwecke, verlagerbar. Die Motorhaube kann zur Führung eines Luftstroms in den Motorraum zur Kühlung der Aggregate, insbesondere des Antriebsaggregats und der Abgaskomponenten, und zur Führung des aufgewärmten Luftstroms aus dem Motorraum in die Umgebung diverse Öffnungen oder dergleichen umfassen, wodurch der Motorraum durch die Motorhaube als im Wesentlichen geschlossen bezeichnet werden kann.

Zum Verschwenken einer Motorhaube zwischen der Schließstellung und der Offenstellung gibt es verschiedene Ausgestaltungen. Einige Motorhaube sind beispielsweise über ein Scharnier zwischen dem hintersten Punkt der Motorhaube und der oberen Rückseite des Motorraums befestigt. Ein im vorderen Bereich der landwirtschaftlichen Arbeitsmaschine, beziehungsweise der Motorhaube, angeordneter Verschluss dient der Fixierung der Motorhaube in ihrer Schließstellung an dem Maschinenrahmen der landwirtschaftlichen Arbeitsmaschine. Wird der Verschluss gelöst, kann die Motorhaube um das hintere Scharnier nach hinten in eine gekippte Stellung geschwenkt werden, um den Zugang zum Motorraum zu ermöglichen. Andere Ausgestaltungen sehen eine gelenkige Verbindung von Motorhaube und Maschinenrahmen im Bereich der oberen Vorderseite des Motorraums vor, wobei eine Verriegelung im rückwärtigen Bereich des Motorraums ausgebildet ist, so dass sie nach vorne kippen kann, sobald die Verriegelung gelöst wird.

Wie eingangs erwähnt, werden landwirtschaftliche Arbeitsmaschine allerdings zunehmend leistungsfähiger, wodurch die Anzahl und die Dimensionierung der im Motorraum angeordneten Aggregate zugenommen hat. Insbesondere bei besonders groß dimensionierten Aggregaten, wie es bei Arbeitsmaschinen hoher Leistungsklassen der Fall ist, kann es vorkommen, dass ein Zugang zu allen Aggregaten nicht uneingeschränkt sichergestellt ist. Die Motorhaube muss in solchen Fällen für bestimmte Reparaturen oder Wartungsarbeiten vollständig abgenommen werden, was allerdings eine sehr zeitraubende Aufgabe sein kann. Es sind daher Motorhauben entwickelt worden, die einerseits einen guten Zugang zu den Aggregaten im Motorraum ermöglichen, ohne dass hierfür die Motorhaube selbst vollständig abgenommen werden muss. Eine solche Motorhaube ist beispielsweise aus der EP 0 792 787 A2 bekannt.

Die Zugänglichkeit zu den im Motorraum angeordneten Aggregaten ist eine Herausforderung/Randbedingung, die es bei der Ausgestaltung einer Motorhaube zu beachten gilt. Weiterhin ergeben sich allerdings auch Herausforderung aus der Dimensionierung der Motorhaube. Insbesondere bei solchen landwirtschaftlichen Arbeitsmaschinen mit hoher Leistung und demnach groß dimensionierten Aggregaten weist auch die Motorhaube eine entsprechende Dimensionierung auf, um den Motorraum in der Schließstellung abdecken zu können. Eine groß dimensionierte Motorhaube bringt entsprechend aufgrund von Rahmenstrukturen und Verkleidungselementen ein hohes Gewicht mit sich, wodurch erhebliche Kräfte zum Öffnen und Schließen der Motorhaube aufgebracht werden müssen. Weiterhin wirken hohe Kräfte auf die Gelenke und Rahmenstrukturen der Motorhaube, was unter Umständen zu Verformungen und äußerst hohen Lagerkräften führen kann, was wiederum die erforderlichen Betätigungskräfte weiter erhöht. Weiterhin sind groß dimensionierte Motorhauben in ihrer Offenstellung besonders anfällig für Seitenwind, sodass bei zu hohen Windstärken die Gefahr besteht, dass die Motorhaube beschädigt wird.

Ausgehend hiervon ist es demnach die Aufgabe der vorliegenden Erfindung die beschriebenen Nachteile auszuräumen und insbesondere eine Motorhaube einer landwirtschaftlichen Arbeitsmaschine derart auszugestalten und weiterzubilden, dass sich diese mit wenig Kraftaufwand Öffnen und Schließen sowie stabil positionieren lässt, dabei gleichzeitig sichergestellt ist, dass eine zumindest im Wesentlichen gleichmäßige Kraftleitung in den tragenden Strukturen der Motorhaube vorliegt.

Diese Aufgabe wird erfindungsgemäß durch die Merkmale des unabhängigen Patentanspruchs 1 gelöst, wobei vorteilhafte Weiterbildungen der erfindungsgemäßen landwirtschaftlichen Arbeitsmaschine Gegenstand der entsprechenden abhängigen Patentansprüche 2 bis 13 sind.

Demnach betrifft die vorliegende Erfindung eine landwirtschaftliche Arbeitsmaschine, insbesondere einen Traktor, mit einem Motorraum und einer den Motorraum zumindest bereichsweise begrenzenden Motorhaube. Die Motorhaube umfasst eine Rahmenstruktur mit einem ersten Rahmenelement, welches zumindest an einem Maschinenrahmen der landwirtschaftlichen Arbeitsmaschine befestigt ist, und einem zweiten Rahmenelement, welches zumindest ein Verkleidungselement der Motorhaube trägt. Das erste Rahmenelement und das zweite Rahmenelement sind in einem hinteren Bereich der Motorhaube mittels eines Gelenks derart miteinander gekoppelt, dass das zweite Rahmenelement relativ zum ersten Rahmenelement reversibel zwischen einer ersten Stellung, die einer Schließstellung der Motorhaube entspricht, und einer zweiten Stellung, die einer Offenstellung der Motorhaube entspricht, verschwenkbar ist. Die landwirtschaftliche Arbeitsmaschine ist dadurch gekennzeichnet, dass die Motorhaube zumindest ein Paar von Aktoren zum Verlagern der Motorhaube umfasst. Das Paar von Aktoren umfasst einen ersten Aktor und einen zweiten Aktor, die jeweils endseitig einerseits an das erste Rahmenelement und andererseits an das zweite Rahmenelement der Rahmenstruktur angebunden sind. Der erste Aktor und der zweite Aktor sind derart zueinander angeordnet, dass sie in unterschiedliche Richtungen wirken.

Die erfindungsgemäße Anordnung der beiden Aktoren des Paares von Aktoren bringt eine Reihe von Vorteilen mit sich. So wird durch die unterschiedlichen Wirkrichtungen der beiden Aktoren eine gleichmäßige Betätigungskraftkurve beim Öffnen und Schließen der Motorhaube erzeugt, welche dazu führt, dass sich die Motorhaube trotz eines hohen Gewichts aufgrund des zweiten Rahmenelements und dem darauf angeordneten Verkleidungselement, insbesondere bei großen Traktoren, wie Systemtraktoren, leicht öffnen und schließen lässt und im Wesentlichen nicht von der vorgesehenen Bewegungsbahn abweicht. Weiterhin werden im geschlossenen und geöffneten Zustand der Motorhaube die auf die Komponenten der Motorhaube, insbesondere das Gelenk, das erste Rahmenelement und das zweite Rahmenelement, wirkenden Kräfte erheblich minimiert. Dies führt dazu, dass die besagten Komponenten in keiner Stellung der Motorhaube übermäßig belastet, insbesondere verformt, werden, was wiederum einen positiven Einfluss auf die Betätigungskräfte hat. Im geöffneten Zustand der Motorhaube wird weiterhin eine Stabilisierung der Motorhaube erzielt, sodass die Motorhaube sowohl bei gewöhnlichen als auch bei ungewöhnlichen äußeren Einflüssen, beispielsweise bei starkem Wind, stets stabil in der Offenstellung positioniert bleibt und ein Beschädigungsrisiko der Motorhaube bzw. ihrer Komponenten zumindest weitgehend reduziert werden kann.

Gemäß einer vorteilhaften Weiterbildung der Erfindung ist vorgesehen, dass der erste Aktor in Fahrzeuglängsrichtung von der Mitte der Arbeitsmaschine weg geneigt und der zweite Aktor in Fahrzeuglängsrichtung zur Mitte der Arbeitsmaschine hin geneigt angeordnet ist.

Vorzugsweise ist vorgesehen, dass der Anbindungspunkt des ersten Aktors am ersten Rahmenelement in Fahrzeuglängsrichtung näher an der Mitte der Arbeitsmaschine liegt als der Anbindungspunkt des zweiten Aktors am ersten Rahmenelement und der Anbindungspunkt des zweiten Aktors am zweiten Rahmenelement in Fahrzeuglängsrichtung näher an der Mitte der Arbeitsmaschine liegt als der Anbindungspunkt des ersten Aktors am zweiten Rahmenelement.

Mit anderen Worten, legt man jeweils durch die Anbindungspunkte des ersten Aktors und des zweiten Aktors mit dem ersten Rahmenelement eine Ebene, die in Hochrichtung der landwirtschaftlichen Arbeitsmaschine, also Fahrzeughochrichtung, und Breitenrichtung der landwirtschaftlichen Arbeitsmaschine, also Fahrzeugbreitenrichtung, verläuft, so ist der erste Aktor relativ zu der durch den Anbindungspunkt des ersten Aktors verlaufenden Ebene in Längsrichtung der landwirtschaftlichen Arbeitsmaschine gesehen von der Mitte der landwirtschaftlichen Arbeitsmaschine weg geneigt angeordnet. Der zweite Aktor hingegen ist relativ zu der durch den Anbindungspunkt des zweiten Aktors verlaufenden Ebene in Längsrichtung der landwirtschaftlichen Arbeitsmaschine gesehen zur Mitte der landwirtschaftlichen Arbeitsmaschine hin geneigt angeordnet. Bei einem Verschwenken der Motorhaube verändert sich zwar der Neigungsgrad relativ zur jeweiligen Ebene, beide Druckfedern sind aber in allen Stellungen der Motorhaube stets wie zuvor beschrieben, also einmal von der Mitte der Arbeitsmaschine weg und einmal zu der Mitte der Arbeitsmaschine hin, geneigt ausgerichtet.

Diese spezielle Anordnung der beiden Aktoren sorgt dafür, dass der zweite Aktor entgegen zum ersten Aktor sowohl im geschlossenen als auch im geöffneten Zustand der Motorhaube nach hinten drückt. Hierdurch minimieren sich insbesondere im geschlossenen Zustand die auf die verschiedenen Lagerpunkte der Motorhaube wirkenden Kräfte in erheblichem Maße. Weiterhin wird im Gegensatz eines Einsatzes von nur einem Aktor, der von der Mitte der Arbeitsmaschine weg geneigt angeordnet ist, verhindert, dass die Motorhaube beim Schließen durch den einen Aktor stark nach vorne gedrückt wird, wodurch sich eine Fehlpositionierung in der Schließstellung einstellen könnte. Der zum ersten Aktor entgegenwirkende zweite Aktor wirkt dieser Bewegung der Motorhaube während des Schließvorgangs entgegen, wodurch die Motorhaube ihre vorgesehene Bewegungsbahn einhält.

Gemäß einer vorteilhaften Weiterbildung der Erfindung ist vorgesehen, dass der erste Aktor und der zweite Aktor jeweils als hydropneumatischer Aktor, mechanischer Aktor oder elektromechanischer Aktor ausgebildet sind.

Vorzugsweise ist vorgesehen, dass der erste Aktor und der zweite Aktor jeweils als Gasdruckfeder ausgebildet sind.

Weiter vorzugsweise ist vorgesehen, dass die Kolben der als Gasdruckfedern ausgebildeten Aktoren an das erste Rahmenelement und die Zylinder der als Gasdruckfedern ausgebildeten Aktoren an das zweite Rahmenelement angebunden sind.

Die Nutzung von hydropneumatischen Aktoren in Gestalt von Gasdruckfedern, die standardisierte Komponenten darstellen, und die spezielle Anordnung derselben an den beiden Rahmenelementen sorgt für eine kostengünstige, dennoch sehr stabile Ausgestaltung der Verschwenkunterstützung der Motorhaube. Weiterhin können die Bauraumrestriktionen, die insbesondere bei Motorhauben von landwirtschaftlichen Arbeitsmaschinen, hier im Speziellen bei Traktoren, vorliegen, eingehalten werden, bei gleichzeitiger Sicherstellung der erforderlichen Funktionen. Außerdem begünstigt eine solche Ausgestaltung die Wartung der Aktoren.

Alternativ hierzu kann es vorgesehen sein, dass der erste Aktor und der zweite Aktor jeweils als mechanische Gasfeder ausgebildet sind. Auch hier kann es weiter vorgesehen sein, dass die Kolben der als mechanischen Gasfedern ausgebildeten Aktoren an das erste Rahmenelement und die Zylinder der als mechanische Gasfedern ausgebildeten Aktoren an das zweite Rahmenelement angebunden sind.

Eine mechanische Gasfeder ähnelt äußerlich einer herkömmlichen Gasdruckfeder. Allerdings sind das bei einer herkömmlichen Gasdruckfeder im Inneren vorhandene Gas und die entsprechend hierfür notwendigen Dichtungen durch eine Druckfeder ersetzt. Eine Ausgestaltung der Aktoren als mechanische Gasfedern ist dahingehend als vorteilhaft anzusehen, dass der Einfluss von Wärme auf die Federn, insbesondere auf die von den Federn aufgebrachten Kräfte, reduziert wird, ein Einsatz demnach insbesondere dort von Vorteil ist, wo erhebliche Wärmeschwankungen auftreten können. Ein weiterer Vorteil des Einsatzes von mechanischen Gasfedern liegt darin, dass diese widerstandsfähiger gegen Verunreinigungen sind, höheren Belastungen standhalten können sowie robuster gegenüber Verwindungen und Stößen in Längsrichtung sind.

Weiter alternativ kann auch eine elektromechanische Ausgestaltung des Paares von Aktoren vorstellbar sein, wodurch ein automatisches Öffnen und Schließen der Motorhaube realisierbar wird.

Gemäß einer vorteilhaften Weiterbildung der Erfindung ist vorgesehen, dass zumindest ein Aktor des Paares von Aktoren in Fahrzeugbreitenrichtung geneigt angeordnet ist.

Vorzugsweise ist vorgesehen, dass der zumindest eine in Fahrzeugbreitenrichtung geneigt angeordnete Aktor des Paares von Aktoren zur Mitte der Arbeitsmaschine hin geneigt angeordnet ist.

Die Neigung zumindest eines Aktors in Fahrzeugbreitenrichtung hin zur Mitte der Arbeitsmaschine sorgt für eine bessere Stabilisierung der Motorhaube in ihrer Offenstellung. Insbesondere bei auf die Motorhaube wirkenden, durch Wind induzierten, hohen Seitenkräften sorgt die Neigung in Fahrzeugbreitenrichtung für eine stabile Positionierung der Motorhaube in der Offenstellung, wodurch ein Beschädigungsrisiko aufgrund von Wind erheblich reduziert wird.

Gemäß einer vorteilhaften Weiterbildung der Erfindung ist vorgesehen, dass das Paar von Aktoren in einem Seitenbereich der Motorhaube angeordnet ist.

Die Anordnung des Paares von Aktoren in einem Seitenbereich der Motorhaube schafft Vorteile im Hinblick auf die bestehenden Bauraumrestriktionen bei landwirtschaftlichen Arbeitsmaschinen. Weiterhin wird die Zugänglichkeit zu den im Motorraum angeordneten Aggregaten der landwirtschaftlichen Arbeitsmaschinen bei einer solchen Ausgestaltung, wenn überhaupt nur in zu vernachlässigendem Maße beeinträchtigt.

Vorzugsweise ist vorgesehen, dass die Motorhaube ein weiteres Paar von Aktoren zum Verlagern der Motorhaube umfasst, wobei das weitere Paar von Aktoren in einem weiteren Seitenbereich der Motorhaube angeordnet ist.

Dabei gilt, dass die zuvor erwähnten vorteilhaften Weiterbildungen gleichermaßen für das weitere Paar von Aktoren zum Verlagern der Motorhaube gültig sind.

Durch die Anbringung eines weiteren Paares von Aktoren in einem weiteren Seitenbereich der Motorhaube lassen sich die zuvor beschriebenen Vorteile hinsichtlich der Betätigungskraftkurve, der auf die Komponenten wirkenden Kräfte, der Führung der Motorhaube während der Verschwenkbewegungen und der Stabilisierung der Motorhaube, insbesondere in der Offenstellung sowie bei starkem Wind, deutlich erhöhen.

Gemäß einer vorteilhaften Weiterbildung der Erfindung ist vorgesehen, dass das die beiden Rahmenelemente miteinander koppelnde Gelenk als Viergelenk ausgebildet ist.

Die Ausgestaltung des Gelenks als Viergelenk ermöglicht es, dass das zweite Rahmenelement beim Verschwenken zwischen der ersten Stellung und der zweiten Stellung nicht nur um eine durch das Gelenk verlaufende Rotationsachse rotiert, sondern gleichzeitig translatorisch in Fahrzeuglängsrichtung und/oder Fahrzeughöhenrichtung bewegt wird. Hierdurch wird eine Öffnungs- und Schließkinematik der Motorhaube erzeugt, die bestehenden Bauraumrestriktionen, die bei einer landwirtschaftlichen Arbeitsmaschine, insbesondere einem Traktor, vorliegen, beispielsweise aufgrund der Positionierung und Ausrichtung einer Kabine, Rechnung trägt und eine gute Zugänglichkeit zum Motorraum erlaubt.

Gemäß einer vorteilhaften Weiterbildung der Erfindung ist vorgesehen, dass zumindest das zweite Rahmenelement als Rohrrahmen ausgebildet ist.

Vorzugsweise ist vorgesehen, dass sowohl das erste Rahmenelement als auch das zweite Rahmenelement als Rohrrahmen ausgebildet sind.

Eine solche Ausgestaltung des einen oder der beiden Rahmenelemente führt zu einem geringen Gewicht der Rahmenstruktur, also geringen zu bewegenden Massen während des Verschwenkens der Motorhaube. Gleichzeitig wird aber eine hohe Tragfähigkeit der Rahmenelemente erzielt, was insbesondere für landwirtschaftliche Arbeitsmaschinen hoher Leistungsklassen mit entsprechend groß dimensionierter Motorhaube von Vorteil ist.

Gemäß einer vorteilhaften Weiterbildung der Erfindung ist vorgesehen, dass das erste Rahmenelement weiterhin an einer im Motorraum angeordneten Kühlereinheit zum Kühlen eines Antriebsaggregats der Arbeitsmaschine befestigt ist.

Die Anbindung des ersten Rahmenelements sowohl am Maschinenrahmen als auch an der Kühlereinheit der landwirtschaftlichen Arbeitsmaschine sorgt für eine vorteilhafte Kraftableitung.

Die vorliegende Erfindung wird nachstehend anhand der in den Figuren abgebildeten Ausführungsformen näher beschrieben.

Es zeigen:
- FIG. 1: eine schematische und exemplarische Seitenansicht einer erfindungsgemäßen landwirtschaftlichen Arbeitsmaschine in Gestalt eines Traktors;
- FIG. 2: eine schematische und exemplarische Seitenansicht einer Motorhaube der erfindungsgemäßen landwirtschaftlichen Arbeitsmaschine aus FIG. 1 in einer Schließstellung;
- FIG. 3: eine schematische und exemplarische Seitenansicht der Motorhaube der erfindungsgemäßen landwirtschaftlichen Arbeitsmaschine aus FIG. 1 in einer Offenstellung;
- FIG. 4: eine schematische und exemplarische räumliche Ansicht der Motorhaube der erfindungsgemäßen landwirtschaftlichen Arbeitsmaschine aus FIG. 1 in der Schließstellung; und
- FIG. 5: eine schematische und exemplarische räumliche Ansicht der Motorhaube der erfindungsgemäßen landwirtschaftlichen Arbeitsmaschine aus FIG. 1 in der Offenstellung.

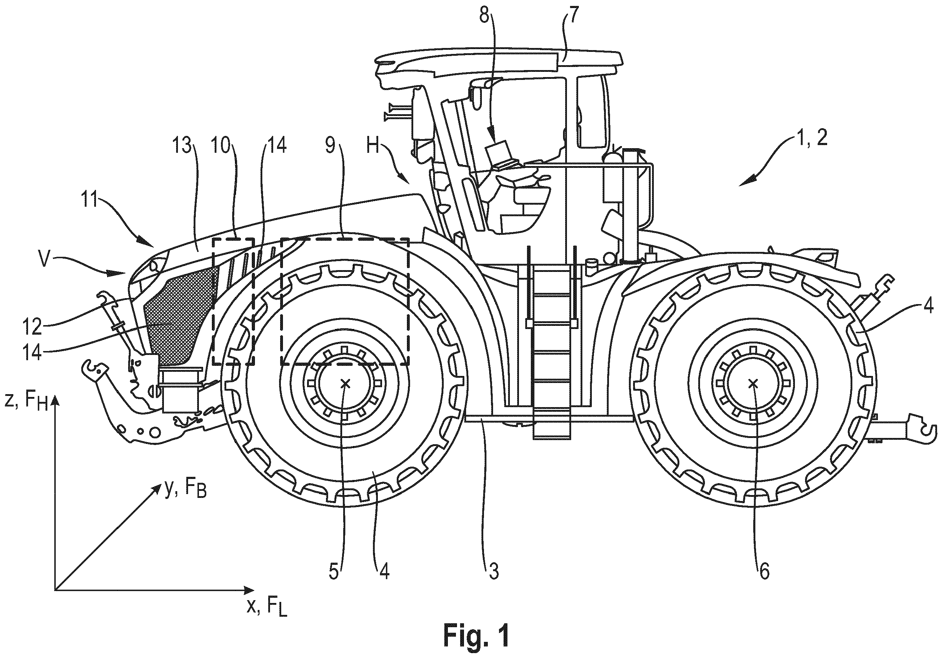

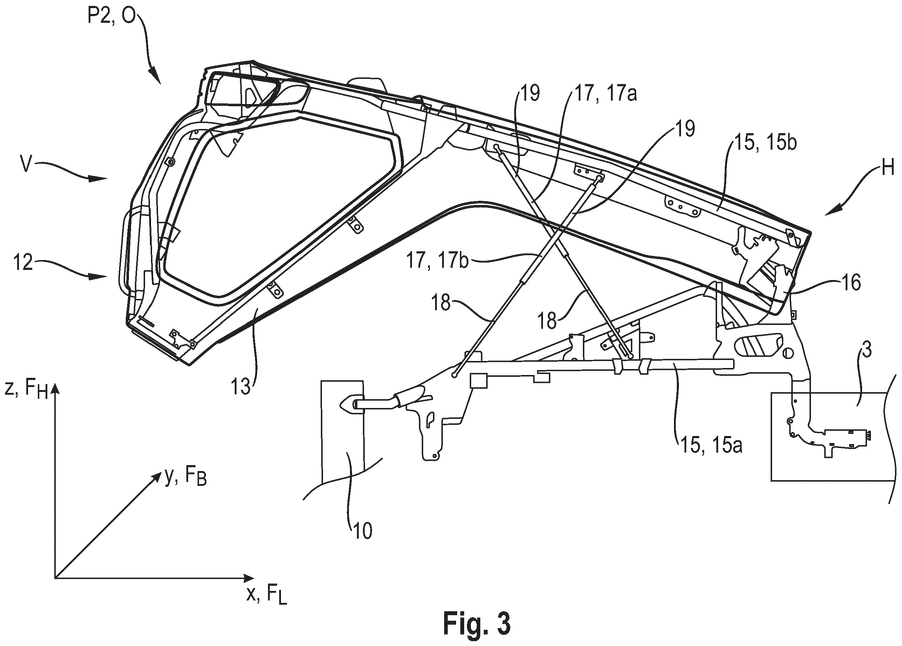

FIG. 1 zeigt eine erfindungsgemäße landwirtschaftliche Arbeitsmaschine 1 in Gestalt eines Traktors 2 in einer Seitenansicht, wobei der grundsätzliche Aufbau eines Traktors als dem Fachmann bekannt angesehen wird. Die erfindungsgemäße landwirtschaftliche Arbeitsmaschine 1 kann anhand von drei Erstreckungsrichtungen räumlich definiert werden, die durch ein Koordinatensystem in den FIGs. 1 bis 3, die jeweils Seitenansichten zeigen, kenntlich gemacht sind. Die erste Erstreckungsrichtung ist dabei die Längsrichtung der landwirtschaftlichen Arbeitsmaschine 1, im Folgenden auch als Fahrzeuglängsrichtung F_{L} bezeichnet, die in x-Achsenrichtung verläuft, die zweite Erstreckungsrichtung ist die Breitenrichtung der landwirtschaftlichen Arbeitsmaschine 1, im Folgenden auch als Fahrzeugbreitenrichtung F_{B} bezeichnet, die in y-Achsenrichtung verläuft, und die dritte Erstreckungsrichtung ist die Höhenrichtung der landwirtschaftlichen Arbeitsmaschine 1, im Folgenden auch als Fahrzeughöhenrichtung F_{H} bezeichnet, die in z-Achsenrichtung verläuft.

Der Traktor 2 umfasst unter anderem einen Maschinenrahmen 3, Bodeneingriffsmittel 4, die einer Vorderachse 5 und einer Hinterachse 6 zugeordnet sind, sowie eine auf dem Maschinenrahmen 3 gelagerte Kabine 7. In der Kabine 7 kann sich ein - in den FIGs. nicht dargestellter- Bediener des Traktors 2 zur Steuerung derselben aufhalten kann. Hierzu ist innerhalb der Kabine 7 üblicherweise eine Bedien- und Steuereinrichtung 8 zur Bedienung und Steuerung des Traktors 2 angeordnet. Zum Antrieb und zur Bereitstellung der zum Betrieb des Traktors 2 benötigten Leistung weist der Traktor 2 ein Antriebsaggregat 9, vorzugsweise in Form eines Verbrennungsmotors, auf. Zur Kühlung des Antriebsaggregats 9 ist eine Kühlereinheit 10 vorgesehen, welche einen Lüfter und einen Kühler zur Kühlung des Antriebsaggregats 9 umfassen kann.

Zumindest das Antriebsaggregat 9 und die Kühlereinheit 10 sind zusammen in einem Motorraum 11 angeordnet, wobei der Motorraum 11 durch eine Motorhaube 12 zumindest bereichsweise begrenzt bzw. umschlossen ist. Zumindest bereichsweise begrenzt bzw. umschlossen bedeutet in diesem Zusammenhang, dass in einem Verkleidungselement 13 der Motorhaube 12 Öffnungen 14 vorgesehen sein können, die der Aufnahme von Zuluft und Abgabe von Abluft zwecks Kühlung des Antriebsaggregats 9 dienen. Die Motorhaube 12 ist zwischen einer Schließstellung S, in der die Motorhaube 12 die im Motorraum 11 angeordneten Aggregate 9, 10 begrenzt bzw. umschließt, und einer Offenstellung O, in der die Motorhaube 12 einen Zugang zum Motorraum 11 und den darin angeordneten Aggregaten 9, 10 freigibt bzw. ermöglicht, verschwenkbar und in jeder dieser Endpositionen der Motorhaube 12 definierenden Stellungen S, O arretierbar.

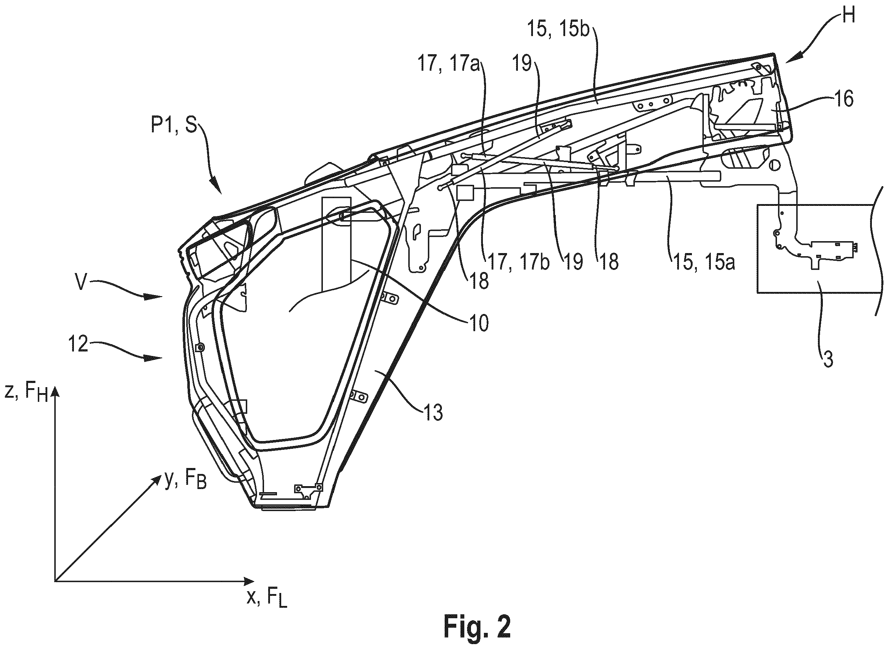

Die Motorhaube 12 umfasst neben dem Verkleidungselement 13 eine Rahmenstruktur 14. Die Rahmenstruktur 15 ist - wie insbesondere in den FIGs. 2 bis 5 dargestellt - zweiteilig ausgebildet. Die Rahmenstruktur 15 umfasst demnach ein erstes Rahmenelement 15a und ein zweites Rahmenelement 15b. Das erste Rahmenelement 15a ist einerseits an dem Maschinenrahmen 3 des Traktors 2 befestigt, vorzugsweise mit dem Maschinenrahmen 3 verschraubt, und andererseits an der Kühlereinheit 10 befestigt, vorzugsweise mit der Kühlereinheit 10 verschraubt. Das zweiten Rahmenelement 15b trägt das Verkleidungselement 13 der Motorhaube 12. Das erste Rahmenelement 15a und das zweite Rahmenelement 15b der Rahmenstruktur 15 der Motorhaube 12 sind in einem hinteren Bereich H der Motorhaube 12, nahe der Kabine 7 des Traktors 2, mittels eines Gelenks 16 derart miteinander gekoppelt bzw. verbunden, dass das zweite Rahmenelement 15b relativ zum ersten Rahmenelement 15a reversibel zwischen einer ersten Stellung P1, die der Schließstellung S der Motorhaube 12 entspricht, und einer zweiten Stellung P2, die der Offenstellung O der Motorhaube 12 entspricht, verschwenkbar ist bzw. verschwenkt werden kann.

Das Gelenk 16 ist in den FIGs. 2 bis 5 als Viergelenk dargestellt, was eine bevorzugte Ausführungsform darstellt. Die Ausgestaltung des Gelenks 16 als Viergelenk ermöglicht es, dass das zweite Rahmenelement 15b beim Verschwenken zwischen der ersten Stellung P1 und der zweiten Stellung P2 nicht nur um eine durch das Gelenk 16 verlaufende - in den FIGs. nicht eingezeichnete - Rotationsachse rotiert, sondern gleichzeitig translatorisch in Fahrzeuglängsrichtung F_{L} und/oder Fahrzeughöhenrichtung F_{H} bewegt wird. Hierdurch wird eine Öffnungs- und Schließkinematik der Motorhaube 12 erzeugt, die bestehenden Bauraumrestriktionen, die bei einem Traktor 2 vorhanden sind, beispielsweise aufgrund der Positionierung und Ausrichtung der Kabine 7, Rechnung trägt und eine gute Zugänglichkeit zum Motorraum 11 erlaubt. Beide Rahmenelemente 15a, 15b sind in den FIGs. 2 bis 5 als Rohrrahmen ausgeführt dargestellt, da eine solche Ausgestaltung zu einem geringen Gewicht der Rahmenstruktur 15, also geringen zu bewegenden Massen während des Verschwenkens der Motorhaube 12, führt, gleichzeitig aber eine hohe Tragfähigkeit aufweist. Andere Arten der Ausgestaltung sind jedoch gleichermaßen möglich, insbesondere eine solche, bei der nur das zweite Rahmenelement 15b als Rohrrahmen ausgeführt ist, das erste Rahmenelement 15a hingegen eine andere Ausgestaltung aufweist.

Wesentlich ist nunmehr, dass die Motorhaube 12 zumindest ein Paar von Aktoren 17 umfasst. Das Paar von Aktoren 17 dient vorrangig dem Verlagern, zumindest einer Unterstützung des Verlagerns, des zweiten Rahmenelements 15b aus der Position P1 in die Position P2, nach Lösen eines - in den FIGs. nicht dargestellten - Verschlusselements in einem vorderen Bereich V der Motorhaube 12, und somit dem Verschwenken der Motorhaube 12 aus der Schließstellung S in die Offenstellung O. Neben dieser Funktion übernimmt das Paar von Aktoren 17 allerdings auch noch die weiteren Funktionen der Arretierung der Motorhaube 12 in ihrer Offenstellung O und der Stabilisierung derselben in ihrer Offenstellung O.

Das Paar von Aktoren 17 ist in dem in den FIGs. dargestellten Ausführungsbeispiel in einem Seitenbereich S1 der Motorhaube 12 angeordnet. Das Paar von Aktoren 17 umfasst einen ersten Aktor 17a und einen zweiten Aktor 17b, die jeweils mit dem einen Ende an das erste Rahmenelement 15a und mit dem anderen Ende an das zweite Rahmenelement 15b der Rahmenstruktur 15 der Motorhaube 12 angebunden sind. Mit anderen Worten, sowohl der erste Aktor 17a als auch der zweite Aktor 17b sind jeweils einseitig einerseits an das erste Rahmenelement 15a und andererseits an das zweite Rahmenelement 15b der Rahmenstruktur 15 der Motorhaube 12 angebunden. Die beiden Aktoren 17a, 17b des Paares von Aktoren 17 zeichnen sich weiterhin dadurch aus, dass sie derart zueinander angeordnet sind, dass sie in unterschiedliche Richtungen wirken.

Dies wird insbesondere dadurch erreicht, dass der erste Aktor 17a in Fahrzeuglängsrichtung F_{L} von der Mitte des Traktors 2 weg geneigt, der zweite Aktor 17b hingegen in Fahrzeuglängsrichtung F_{L} zur Mitte des Traktors 2 hin geneigt angeordnet ist. Legt man die Erstreckung des Traktors 2 in Fahrzeuglängs-, Fahrzeugbreiten- und Fahrzeughöhenrichtung F_{L}, F_{B}, F_{H} zugrunde, so wird die Mitte des Traktors 2 durch den Schnittpunkt einer xz-Ebene bei halber Fahrzeugbreite, einer yz-Ebene bei halber Fahrzeuglänge und einer xy-Ebene bei halber Fahrzeughöhe definiert. Mit anderen Worten, der erste Aktor 17a ist in Fahrzeuglängsrichtung F_{L} zum vorderem Bereich V der Motorhaube 12 hin geneigt, der zweite Aktor 17b hingegen in Fahrzeuglängsrichtung F_{L} zum hinteren Bereich H der Motorhaube 12 hin geneigt angeordnet.

Die Anbindungspunkte der Aktoren 17a, 17b des Paares von Aktoren 17 sind dabei wie folgt gewählt: Der Anbindungspunkt des ersten Aktors 17a am ersten Rahmenelement 15a liegt in Fahrzeuglängsrichtung F_{L} gesehen näher an der Mitte des Traktors 2 als der Anbindungspunkt des zweiten Aktors 17b am ersten Rahmenelement 15a. Der Anbindungspunkt des zweiten Aktors 17b am zweiten Rahmenelement 15b liegt in Fahrzeuglängsrichtung F_{L} gesehen näher an der Mitte des Traktors 2 als der Anbindungspunkt des ersten Aktors 17a am zweiten Rahmenelement 15b. Mit anderen Worten, legt man jeweils durch die Anbindungspunkte des ersten Aktors 17a und des zweiten Aktors 17b mit dem ersten Rahmenelement 15a eine yz-Ebene, so ist der erste Aktor 17a relativ zu der durch den Anbindungspunkt des ersten Aktors 17a verlaufenden yz-Ebene in Fahrzeuglängsrichtung F_{L} gesehen von der Mitte des Traktors 2 weg geneigt angeordnet. Der zweite Aktor 17b hingegen ist relativ zu der durch den Anbindungspunkt des zweiten Aktors 17b verlaufenden yz-Ebene in Fahrzeuglängsrichtung F_{L} gesehen zur Mitte des Traktors 2 hin geneigt angeordnet. Diese grundsätzliche Anordnung der beiden Aktoren 17a, 17b ändert sich bei einem Verschwenken der Motorhaube 12 zwischen Offenstellung O und Schließstellung S nicht, lediglich der Neigungsgrad relativ zur jeweiligen yz-Ebene durch die Anbindungspunkte verändert sich hierbei.

Die Aktoren 17a, 17b des Paares von Aktoren 17 sind in den FIGs. 2 bis 5 als hydropneumatische Aktoren in Form jeweils einer Gasdruckfeder ausgebildet dargestellt. Alternativ zu dieser Ausgestaltung könnten die beiden Aktoren 17a, 17b als mechanische Aktoren in Form jeweils einer mechanischen Gasfeder ausgebildet sein. Eine mechanische Gasfeder entspricht äußerlich einer Gasdruckfeder, wobei allerdings das bei einer Gasdruckfeder im Inneren vorhandene Gas und die entsprechend hierfür notwendigen Dichtungen durch eine Druckfeder ersetzt sind. Weiter alternativ könnten die beiden Aktoren 17a, 17b auch als elektromechanische Aktoren ausgebildet sein. Bei der insofern bevorzugten Ausgestaltung der Aktoren 17a, 17b als Gasdruckfedern ist vorzugsweise der Kolben 18 eines jeden Aktors 17a, 17b an das erste Rahmenelement 15a angebunden, der Zylinder 19 hingegen an das zweite Rahmenelement 15b.

Weiterhin kann das Paar von Aktoren 17 derart angeordnet sein, dass zumindest einer der Aktoren 17a, 17b in Fahrzeugbreitenrichtung F_{B} geneigt angeordnet ist. Der zumindest eine geneigte Aktor 17a, 17b ist dabei derart angeordnet, dass er in Fahrzeugbreitenrichtung F_{B} zur Mitte des Traktors 2 hin geneigt ist. Vorzugsweise ist der erste Aktor 17a des Paares von Aktoren 17 zur Mitte des Traktors hin geneigt und der zweite Aktor 17b vertikal verlaufend angeordnet. Hierdurch kann einerseits eine besonders gute Stabilität der Motorhaube 12 in ihrer Offenstellung O erzielt werden, gleichzeitig aber eine ausreichende Öffnungskraft bereitgestellt werden, wobei die Komponenten der Motorhaube 12 nicht übermäßig belastet werden. Eine Neigung nur des zweiten Aktors 17b oder aber beider Aktoren 17a, 17b zur Mitte des Traktors 2 hin ist allerdings auch vorstellbar.

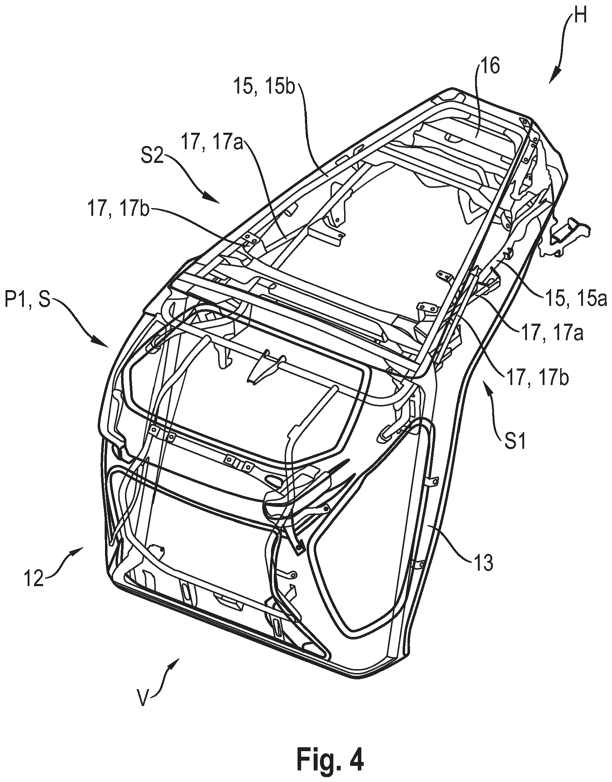

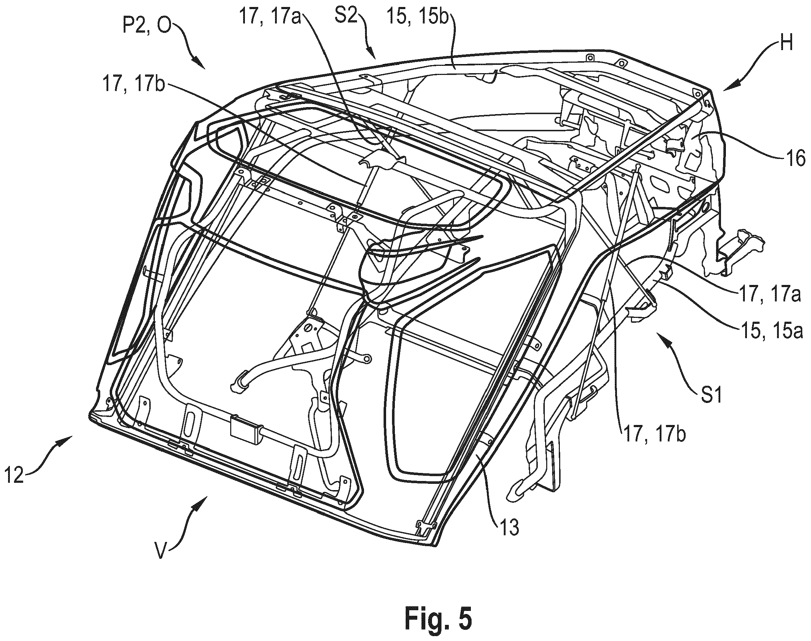

In einer insbesondere in den FIGs. 4 und 5 dargestellten bevorzugten Ausführungsform ist ein weiteres Paar von Aktoren 17 vorgesehen. Dieses weitere Paar von Aktoren 17 ist in einem weiteren Seitenbereich S2 der Motorhaube 12 angeordnet. Auch dieses weitere Paar von Aktoren 17 umfasst einen ersten Aktor 17a und zweiten Aktor 17b, die jeweils mit dem einen Ende an das erste Rahmenelement 15a und mit dem anderen Ende an das zweite Rahmenelement 15b der Rahmenstruktur 15 der Motorhaube 12 angebunden sind. Die beiden Aktoren 17a, 17b des weiteren Paares von Aktoren 17 zeichnen sich wie auch das zuvor beschriebene Paar von Aktoren 17 im Seitenbereich S1 weiterhin dadurch aus, dass diese derart zueinander angeordnet sind, dass sie in unterschiedliche Richtungen wirken. Die weiteren in Bezug auf das im Seitenbereich S1 angeordnete Paar von Aktoren 17 beschriebenen Ausgestaltungen bzw. Ausführungen besitzen gleichermaßen Gültigkeit für das weitere Paar von Aktoren 17.

Abschließend sei angemerkt, dass die vorstehend beschriebenen Ausführungsformen lediglich zur Beschreibung der beanspruchten Lehre dienen, diese jedoch keinesfalls als einschränkend oder erschöpfend anzusehen sind.

**Bezugszeichenliste**

| | | | |
|---|---|---|---|
| 1 | Landwirtschaftliche Arbeitsmaschine | 17a | Erster Aktor |
| | | 17b | Zweiter Aktor |
| 2 | Traktor | 18 | Kolben |
| 3 | Maschinenrahmen | 19 | Zylinder |
| 4 | Bodeneingriffsmittel | | |
| 5 | Vorderachse | O | Offenstellung der Motorhaube |
| 6 | Hinterachse | S | Schließstellung der Motorhaube |
| 7 | Kabine | | |
| 8 | Steuereinrichtung | H | Hinterer Bereich der Motorhaube |
| 9 | Antriebsaggregat | | |
| 10 | Kühlereinheit | V | Vorderer Bereich der Motorhaube |
| 11 | Motorraum | S1 | Seitenbereich der Motorhaube |
| 12 | Motorhaube | S2 | Seitenbereich der Motorhaube |
| 13 | Verkleidungselement | P1 | Erste Position des zweiten Rahmenelements |
| 14 | Öffnungen | | |
| 15 | Rahmenstruktur | P2 | Zweite Position des zweiten Rahmenelements |
| 15a | Erstes Rahmenelement | | |
| 15b | Zweites Rahmenelement | F_{L} | Fahrzeuglängsrichtung |
| 16 | Gelenk | F_{B} | Fahrzeugbreitenrichtung |
| 17 | Paar von Aktoren | F_{H} | Fahrzeughöhenrichtung |

## Patentansprüche

1. Landwirtschaftliche Arbeitsmaschine (1), insbesondere Traktor (2), mit einem Motorraum (11) und einer den Motorraum (11) zumindest bereichsweise begrenzenden Motorhaube (12), wobei die Motorhaube (12) eine Rahmenstruktur (15) mit einem ersten Rahmenelement (15a), welches zumindest an einem Maschinenrahmen (3) der landwirtschaftlichen Arbeitsmaschine (1) befestigt ist, und einem zweiten Rahmenelement (15b), welches zumindest ein Verkleidungselement (13) der Motorhaube (12) trägt, umfasst, wobei das erste Rahmenelement (15a) und das zweite Rahmenelement (15b) in einem hinteren Bereich (H) der Motorhaube (12) mittels eines Gelenks (16) derart miteinander gekoppelt sind, dass das zweite Rahmenelement (15b) relativ zum ersten Rahmenelement (15a) reversibel zwischen einer ersten Stellung (P1), die einer Schließstellung (S) der Motorhaube (12) entspricht, und einer zweiten Stellung (P2), die einer Offenstellung (O) der Motorhaube (12) entspricht, verschwenkbar ist, **dadurch gekennzeichnet, dass** die Motorhaube (12) zumindest ein Paar von Aktoren (17) zum Verlagern der Motorhaube (12) umfasst, wobei das Paar von Aktoren (17) einen ersten Aktor (17a) und einen zweiten Aktor (17b) umfasst, die jeweils endseitig einerseits an das erste Rahmenelement (15a) und andererseits an das zweite Rahmenelement (15b) der Rahmenstruktur (15) angebunden sind, wobei der erste Aktor (17a) und der zweite Aktor (17b) derart zueinander angeordnet sind, dass sie in unterschiedliche Richtungen wirken.

2. Landwirtschaftliche Arbeitsmaschine (1) nach Anspruch 1, **dadurch gekennzeichnet, dass** der erste Aktor (17a) in Fahrzeuglängsrichtung (F_{L}) von der Mitte der Arbeitsmaschine (1) weg geneigt und der zweite Aktor (17b) in Fahrzeuglängsrichtung (F_{L}) zur Mitte der Arbeitsmaschine (1) hin geneigt angeordnet ist.

3. Landwirtschaftliche Arbeitsmaschine (1) nach Anspruch 2, **dadurch gekennzeichnet, dass** der Anbindungspunkt des ersten Aktors (17a) am ersten Rahmenelement (15a) in Fahrzeuglängsrichtung (F_{L}) näher an der Mitte der Arbeitsmaschine (1) liegt als der Anbindungspunkt des zweiten Aktors (17b) am ersten Rahmenelement (15a) und der Anbindungspunkt des zweiten Aktors (17b) am zweiten Rahmenelement (15b) in Fahrzeuglängsrichtung (F_{L}) näher an der Mitte der Arbeitsmaschine (1) liegt als der Anbindungspunkt des ersten Aktors (17a) am zweiten Rahmenelement (15b).

4. Landwirtschaftliche Arbeitsmaschine (1) nach einem der Ansprüche 1 bis 3, **dadurch gekennzeichnet, dass** der erste Aktor (17a) und der zweite Aktor (17b) jeweils als hydropneumatischer Aktor, mechanischer Aktor oder elektromechanischer Aktor ausgebildet sind.

5. Landwirtschaftliche Arbeitsmaschine (1) nach Anspruch 4, **dadurch gekennzeichnet, dass** der erste Aktor (17a) und der zweite Aktor (17b) jeweils als Gasdruckfeder oder als mechanische Gasfeder ausgebildet sind.

6. Landwirtschaftliche Arbeitsmaschine (1) nach Anspruch 5, **dadurch gekennzeichnet, dass** die Kolben (18) der als Gasdruckfedern oder mechanische Gasfedern ausgebildeten Aktoren (17a, 17b) an das erste Rahmenelement (15a) und die Zylinder (19) der als Gasdruckfedern oder mechanische Gasfedern ausgebildeten Aktoren (17a, 17b) an das zweite Rahmenelement (15b) angebunden sind.

7. Landwirtschaftliche Arbeitsmaschine (1) nach einem der Ansprüche 1 bis 6, **dadurch gekennzeichnet, dass** zumindest ein Aktor (17a, 17b) des Paares von Aktoren (17) in Fahrzeugbreitenrichtung (F_{B}) geneigt angeordnet ist.

8. Landwirtschaftliche Arbeitsmaschine (1) nach Anspruch 7, **dadurch gekennzeichnet, dass** der zumindest eine in Fahrzeugbreitenrichtung (F_{B}) geneigt angeordnete Aktor (17a, 17b) des Paares von Aktoren (17) zur Mitte der Arbeitsmaschine (1) hin geneigt angeordnet ist.

9. Landwirtschaftliche Arbeitsmaschine (1) nach einem der Ansprüche 1 bis 8, **dadurch gekennzeichnet, dass** das Paar von Aktoren (17) in einem Seitenbereich (S1, S2) der Motorhaube (12) angeordnet ist.

10. Landwirtschaftliche Arbeitsmaschine (1) nach Anspruch 9, **dadurch gekennzeichnet, dass** die Motorhaube (12) ein weiteres Paar von Aktoren (17) zum Verlagern der Motorhaube (12) umfasst, wobei das weitere Paar von Aktoren (17) in einem weiteren Seitenbereich (S2, S1) der Motorhaube (12) angeordnet ist.

11. Landwirtschaftliche Arbeitsmaschine (1) nach einem der Ansprüche 1 bis 10, **dadurch gekennzeichnet, dass** das die beiden Rahmenelemente (15a, 15b) miteinander koppelnde Gelenk (16) als Viergelenk ausgebildet ist.

12. Landwirtschaftliche Arbeitsmaschine (1) nach einem der Ansprüche 1 bis 11, **dadurch gekennzeichnet, dass** zumindest das zweite Rahmenelement (15b), vorzugsweise sowohl das erste Rahmenelement (15a) als auch das zweite Rahmenelement (15b), als Rohrrahmen ausgebildet ist.

13. Landwirtschaftliche Arbeitsmaschine (1) nach einem der Ansprüche 1 bis 12, **dadurch gekennzeichnet, dass** das erste Rahmenelement (15a) weiterhin an einer im Motorraum (11) angeordneten Kühlereinheit (10) zum Kühlen eines Antriebsaggregats (9) der Arbeitsmaschine (1) befestigt ist.
